Europäisches Patentamt

European Patent Office

Office européen des brevets

(11) Veröffentlichungsnummer: **0 364 663**
A1

## (12) EUROPÄISCHE PATENTANMELDUNG

(21) Anmeldenummer: 89110340.0

(22) Anmeldetag: 08.06.89

(51) Int. Cl.5: **B64D 1/04**

(30) Priorität: 17.10.88 DE 3835355

(43) Veröffentlichungstag der Anmeldung:
25.04.90 Patentblatt 90/17

(84) Benannte Vertragsstaaten:
DE ES FR GB IT SE

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Moggert, Wolf-Dieter**
**An der Ottosäule 11**
**D-8012 Ottobrunn(DE)**

(54) **Ausstossrohr für Subminitionskörper.**

(57) In einem Ausstoßrohr 1 für hintereinander angeordnete Submunitionskörper 2 sind im hinteren Ende
ein Treibspiegel 12 und im vorderen Ende eine an
die Submunitionskörper 2 anliegende Andruckscheibe 3 sowie vor dieser ein Deckel 5 vorhanden. In die
Andruckscheibe 3 ist eine Schraube 4 eingesetzt ist,
die mit ihrem anderen Ende durch den Deckel 5
hindurchgeführt ist, sich mit einem mittleren Bund 4a
gegen die Innenseite des Deckels 5 abstützt und die
beim Anziehen die Andruckscheibe 3 gegen die
Submunitionskörper 2 drückt. Zwischen dem Bund
4a der Schraube 4 und der Innenseite des Deckels 5
kann eine Tellerfeder 7 angeordnet sein.

EP 0 364 663 A1

FIG. 1

Xerox Copy Centre

## Ausstoßrohr für Submunitionskörper

Die Erfindung bezieht sich auf ein Ausstoßrohr für hintereinander angeordnete Submunitionskörper, das zugleich als Lager- und Transportrohr dient.

Das Einführen von Submunitionskörpern in ein Ausstoßrohr, bzw. in einen eine Anzahl von Ausstoßrohren aufweisenden Behälter, erfolgt im allgemeinen durch eine aufwendige Belademaschine. Dabei werden die Submunitionskörper durch einen am Umfang mit starken Federn versehenen Abschlußdeckel zusammengedrückt und dann der Abschlußdeckel unter Beibehaltung des Druckes durch die Belademaschine am Ausstoßrohr befestigt. Die Belademaschine ist sehr aufwendig und teuer und der Abschlußdeckel mit den Federn nimmt einen beträchtlichen Teil der Länge des Ausstoßrohres in Anspruch.

Der Erfindung liegt die Aufgabe zugrunde, ein Ausstoßrohr der eingangs genannten Art zu schaffen, welches einfach und billig beladen und gesichert werden kann und bei dem die Mittel dazu einen nur geringen Teil der Rohrlänge in Anspruch nehmen.

Diese Aufgabe wird durch die im Anspruch 1 gekennzeichneten Merkmale gelöst. Vorteilhafte Ausgestaltungen der Erfindung sind in den Unteransprüchen gekennzeichnet.

Der wesentlichste Vorteil der Erfindung besteht darin, daß das Einführen der Submunitionskörper in ein Ausstoßrohr und das Sichern nach dem Einführen leicht und ohne großen Aufwand auch von Hand durchgeführt werden kann. Nach dem Einführen des Treibspiegels und der Submunitionskörper wird die mit der Schraube versehene Andruckscheibe und darauf der Deckel eingesetzt. Nach dem Sichern des Deckels durch z.B. drei Scherstifte wird die Andruckscheibe mittels eines einfachen Werkzeugs mit Hilfe der Schraube fest gegen die Submunitionskörper gedrückt. Damit auch nach längerer Lagerzeit und nach Vibrationen die erforderliche Vorspannung erhalten bleibt, kann zwischen dem Schraubenbund und der Innenseite des Deckels eine Tellerfeder eingesetzt werden. Am Treibspiegel, an dem Deckel und an dem Schraubenkopf vorgesehene Dichtungen garantieren eine bleibende Abdichtung gegen alle Umwelteinflüsse. Durch die geringen Höhen der Andruckscheibe und des Deckels ist eine größere Länge des Ausstoßrohres als bisher für die Submunitionskörper nutzbar. Die wenigen in das Ausstoßrohr einzusetzenden Teile, wie der Treibspiegel, die Andruckscheibe und der Deckel sind kostengünstig als Druckgußteile herstellbar. Die Schraube ist ein einfaches Automatendrehteil.

Die Erfindung wird nachstehend anhand des in der Zeichnung dargestellten Ausführungsbeispiels erläutert. Es zeigen

Fig. 1 das vordere Ende eines mit Submunitionskörpern gefüllten Ausstoßrohres und

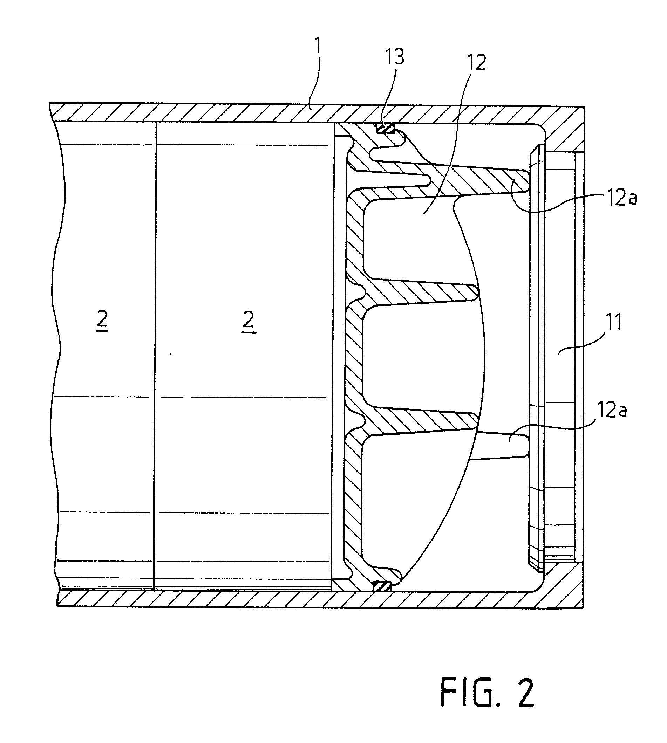

Fig. 2 das hintere Ende des Ausstoßrohres nach Fig. 1.

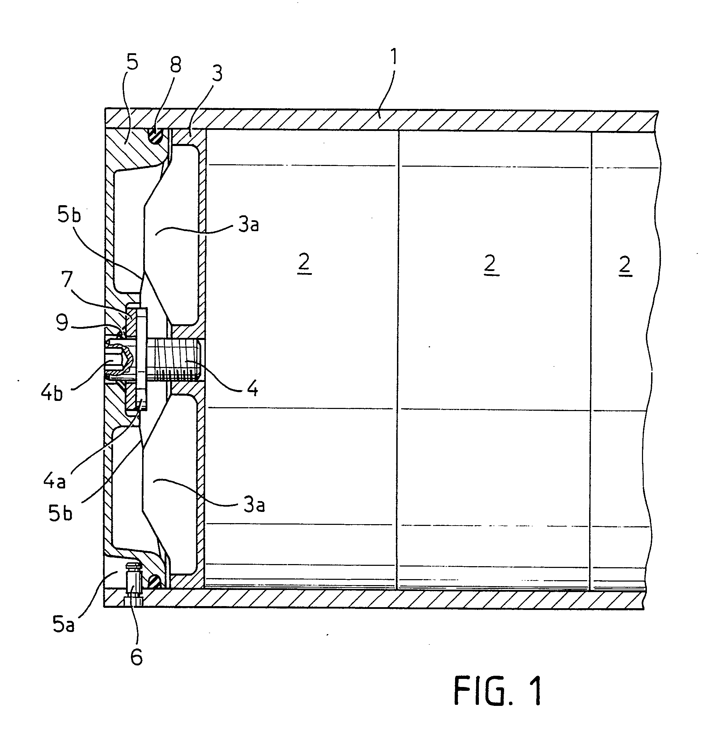

Eine in Fig. 1 dargestelltes vordere Ende eines Ausstoßrohres 1 ist mit Submunitionskörpern 2 gefüllt. Gegen die Submunitionskörper 2 ist als Abschluß eine Andruckscheibe 3 gesetzt, in deren Mittelachse eine Schraube 4 mit Gewinde eingeschraubt ist. Als Rohrabschluß ist ein Deckel 5 vorhanden, der mit einer Bohrung zur Aufnahme der Schraube 4 versehen ist. Die Schraube 4 ist mit einem mittlerem Bund 4a und im Vorderteil mit einem Innensechskant 4b versehen. In dem Deckel 5 sind drei Taschen 5a zur Aufnahme von Scherstiften 6 vorgesehen. Zwischen dem Schraubenbund 4a und dem Deckel 5 ist eine im zusammengedrückten Zustand dargestellte Tellerfeder 7 vorhanden. Um beim Anziehen der Schraube 5 ein Mitdrehen der Andruckscheibe 3 zu vermeiden, sind an letzterer Rippen 3a und an dem Deckel 5 Rippen 5b vorgesehen. Am Umfang des Deckels 5 sowie zwischen der Schaube 4 und der Mittelbohrung des Deckels 5 sind Dichtringe 8 und 9 vorhanden.

Das hintere Ende des Ausstoßrohres 1 ist mit einem Bodendeckel 11 abgeschlossen. Auf den Bodendeckel 11 sützt sich ein Treibspiegel 12 mit drei angesetzten Noppen 12a ab. Gegen den Treibspiegel 12 sind die Submunitionskörper 2 geschoben. Außerdem ist noch ein am Umfang des Treibspiegels angeordneter Dichtring 13 vorhanden. Die zum Ausstoßen des Treibspiegels 12 und der Submunitionskörper 2 erforderlichen Ladungen und Zünder sind üblicher Art und hier nicht dargestellt.

## Ansprüche

1 Ausstoßrohr für hintereinander angeordnete Submunitionskörper, das zugleich als Lager- und Transportrohr dient, **dadurch gekennzeichnet,** daß im hinteren Ende des Ausstoßrohres (1) ein Treibspiegel (12) und am vorderen Ende des Ausstoßrohres eine an die Submunitionskörper (2) anliegende Andruckscheibe (3) sowie vor dieser ein Deckel (5) angeordnet sind und daß in die Andruckscheibe (3) eine Schraube (4) eingesetzt ist, die mit ihrem anderen Ende durch den Deckel (5) hindurchgeführt ist, sich mit einem mittleren Bund (4a) gegen die Innenseite des Deckels abstützt und die beim Anziehen die Andruckscheibe gegen die Submunitionskörper (2) drückt.

2. Ausstoßrohr nach Anspruch 1, **dadurch gekennzeichnet,** daß der Deckel (5) durch Scherstifte (6) im Ausstoßrohr (1) befestigt ist.

3. Ausstoßrohr nach den Ansprüchen 1 und 2, **dadurch gekennzeichnet,** daß die Andruckscheibe (3) und der Deckel (5) mit zueinander gerichteten und einander überlappenden Rippen (3a, 5b) versehen sind, die beim Anziehen der Schraube (4) die Andruckscheibe (3) gegen ein Verdrehen sichern.

4. Ausstoßrohr nach den Ansprüchen 1 bis 3, **dadurch gekennzeichnet,** daß zwischen dem Bund (4a), der Schraube (4) und der Innenseite des Deckels (5) eine Tellerfeder (7) angeordnet ist.

5. Ausstoßrohr nach Anspruch 1, **dadurch gekennzeichnet,** daß der Deckel (5), die Schraube (4) und der Treibspiegel (12) an ihrem Umfang mit Dichtringen (8, 9, 13) versehen sind.

FIG. 1

FIG. 2

| Kategorie | EINSCHLÄGIGE DOKUMENTE | | EP 89110340.0 |
|---|---|---|---|
| | Kennzeichnung des Dokuments mit Angabe, soweit erforderlich, der maßgeblichen Teile | Betrifft Anspruch | KLASSIFIKATION DER ANMELDUNG (Int. Cl.X.5 |
| A | <u>CH - A5 - 652 821</u> (DIEHL GMBH & CO.) * Fig. 1,4 * -- | 1,5 | B 64 D 1/04 |
| A | <u>US - A - 4 263 835</u> (L.DRAGONUK) * Fig. 2 * -- | 1,4 | |
| A | <u>US - A - 4 733 597</u> (T.E.UPHAM) * Gesamt * ---- | | |

RECHERCHIERTE SACHGEBIETE (Int. Cl.4)

F 41 F 5/00
B 64 D 1/00

Der vorliegende Recherchenbericht wurde für alle Patentansprüche erstellt.

| Recherchenort | Abschlußdatum der Recherche | Prüfer |
|---|---|---|
| WIEN | 29-09-1989 | JASICEK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82